# EUROPEAN PATENT APPLICATION

(11) **EP 4 542 460 A1**
(43) Date of publication of application: **23.04.2025**
(21) Application number: 24207096.9
(22) Date of filing: 17.10.2024
(51) Int. Cl.: G06N 10/60

(54) **SYSTEMS AND METHODS FOR EXECUTING VARIATIONAL QUANTUM EIGENSOLVER ALGORITHMS WITH A QUANTUM COMPUTER**

(30) Priority: 17.10.2023 US 202318380921
(71) Applicant: Robert Bosch GmbH, 70469 Stuttgart (DE)
(72) Inventor: Aikaterini, Gratsea, Los Angeles, CA 90024 (US); Gregory, Samsonidze, Cupertino, CA 95014 (US)
(74) Representative: Isarpatent

(57) **Abstract**

In some implementations, the device may include generating, by a classical computer, a quantum circuit having: a subset of qubits including at least three of the qubits arranged to execute a linear string of gates; a first layer having a vertically centered arrangement of at least three Ry gates on each of the linear strings of gates for each of the subset of qubits; a second layer having a sequence of entangling gate followed by an single qubit gate on each linear string of gates where each entangling gate entangles the linear string of gates of the subsequent qubit; a third layer having the step shape of the second layer; receiving parameters associated with a physical environment. The device may execute the VQE algorithm based on the quantum circuit and the parameters of the physical environment. The method may further output an approximation of a base state of the physical environment.

## Description

### TECHNICAL FIELD

The present disclosure relates to executing quantum algorithms with quantum computing devices utilizing quantum circuits.

### BACKGROUND

Traditional computers can be utilized to generate quantum circuits in order to execute quantum algorithms on quantum computers such as noisy intermediate scale quantum (NISQ) devices. The Variational Quantum Eigensolver (VQE) algorithm may be one of the most promising algorithms for realization on NISQ devices. However, VQE algorithms suffer from a plethora of problems, such as barren plateaus, and thus, the algorithm development has proven to be challenging.

### SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In one general aspect, the method may include generating, by a classical computer, a quantum circuit having a subset of qubits including at least three of the qubits from a plurality of qubits arranged to execute a linear string of gates, where the subset of qubits are arranged vertically and execute the linear string of gates in a horizontal direction. The method may further include a first layer having a vertically centered arrangement of at least three Ry gates on each of the linear strings of gates for each of the subset of qubits. The method may also include a second layer having a step shape of a Cz entangling gate followed by an Ry gate on each linear string of gates where the entangling gate entangles the linear string of gates of the subsequent qubit. The method may further include a third layer having the step shape of the second layer where the third layer does not vertically overlap with the second layer. The method may include receiving parameters associated with a physical environment. The method may also include executing, by the quantum computer, the VQE based on the quantum circuit and the parameters of the physical environment. The method may further include outputting, via the quantum computer, an approximation of a base state of the physical environment.

Other embodiments of this aspect include corresponding computer systems, apparatus, and computer programs recorded on one or more computer storage devices, each configured to perform the actions of the methods.

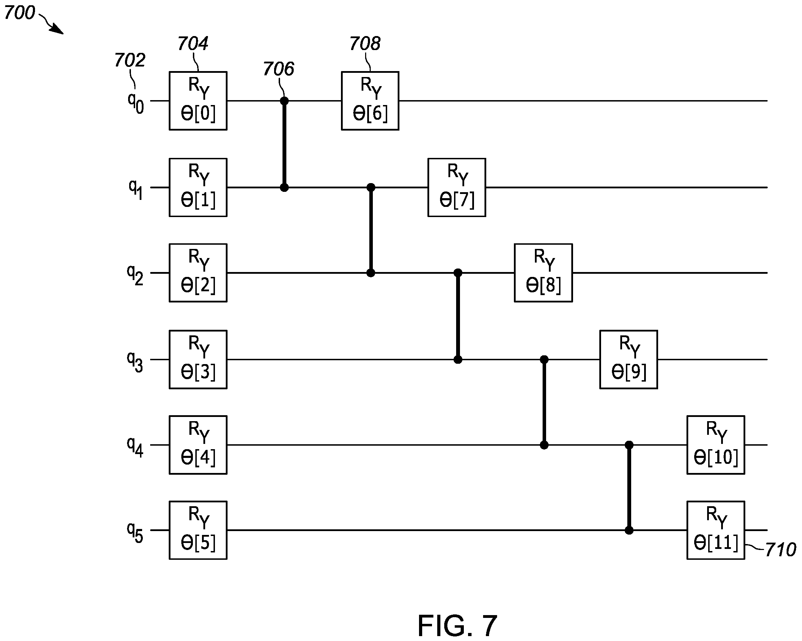

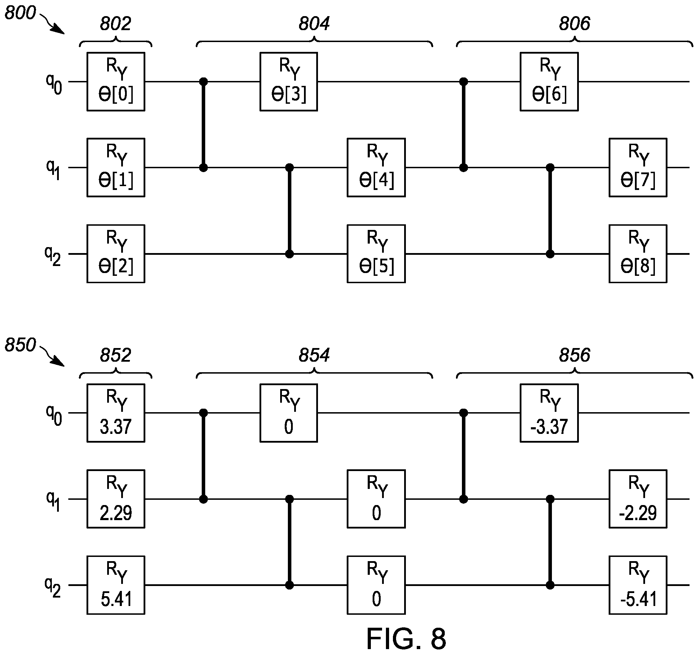

Implementations may include one or more of the following features. The method may further include initializing the at least three Ry gates of the first layer based on random values, and initializing the at least three Ry gates of the second layer with the value zero. The method may further include initializing the at least three Ry gates of the third layer based on a negative value of the Ry gate of the first layer which is on the respective string of gates. The method may further include additional layers which may be included in between the second layer and third layer, and where one or more Ry gates of additional layers are initialized with the value zero. The method may further include configuring the subset of qubits to an entangled initial state before applying the parameterized circuit of FIG. 7 or FIG. 8. The entangled initial state may be a mean field state. The method may also include where the entangled initial state is not a product state. The method may further include where a right most Ry gate of the linear string of gates associated with a third qubit of the subset of qubits is vertically centered with a right most Ry gate of a second qubit of the subset of qubits. The method may also include where the total number of layers is odd. The method may further include where the quantum computer is a noisy intermediate scale quantum computer. Implementations of the described techniques may include hardware, a method or process, or a computer tangible medium.

### BRIEF DESCRIPTION OF THE DRAWINGS

FIG. 1 illustrates an operation acting upon an example qubit.
FIG. 2 illustrates a schematic example of a quantum computer.
FIG. 3 illustrates a schematic exemplary method for generating a control signal to perform operations on the quantum computing device and for processing measurement signals from the quantum computing device.
FIG. 4 illustrates a schematic example of a hybrid system including a classical and a quantum computing device.
FIG. 5 is a flowchart of an example process for executing the VQE based on executing a quantum circuit on the quantum computing device.
FIG. 6 is a flowchart of an example process for initializing the quantum circuit.
FIG. 7 is a diagram illustrating an example arrangement of the quantum circuit.
FIG. 8 is a diagram illustrating an example initialization of the layers of the quantum circuit.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative bases for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical application. Various combinations and modifications of the features consistent with the teachings of this disclosure, however, could be desired for particular applications or implementations.

"A", "an", and "the" as used herein refers to both singular and plural referents unless the context clearly dictates otherwise. By way of example, "a processor" programmed to perform various functions refers to one processor programmed to perform each and every function, or more than one processor collectively programmed to perform each of the various functions.

The VQE algorithm may be one of the most promising algorithms for realization on current NISQ devices. But VQE algorithms suffer from a plethora of problems, such as barren plateaus, and thus, the algorithm development has proven to be challenging. The systems and methods described herein may be configured prepare good ground state approximations with shallow circuit depths suitable for implementations on current NISQ devices.

The systems and methods described herein may be configured to utilize a VQE optimization strategy which may circumvent the barren plateau issue and has very shallow circuit depths. The systems and methods described herein may utilize the configuration for generating good ground state approximations on current NISQ devices without applying any error mitigation techniques. The systems and methods described herein may indicate the potential that VQE algorithms may have into leveraging the capabilities of NISQ devices and highlight the importance that algorithmic development plays in demonstrating the full potential of the quantum hardware.

VQE algorithms may suffer from certain problems. Moreover, VQE algorithms may leverage the capabilities of both classical and quantum computers, previous VQE implementations on current quantum devices have degraded performance. Despite some progress, previous implementations have not developed a VQE algorithm that can leverage the capabilities of current NISQ devices.

The systems and methods described herein propose a VQE optimization strategy that generates good ground state approximations with shallow circuit depth and small number of gates which makes the strategy favorable for implementations on current NISQ devices.

The main three elements of the systems and methods described herein may include a mean field starting state, shallow circuit structures, and identity block initialization on the parameterized set of gates.

The systems and methods described herein may utilize mean-field starting states by initializing the circuit to a classically inspired state that is not a product state. In some embodiments, the choice of the starting state may affect the trainability of a shallow-depth hardware-efficient type ansatz. For example, a little prior knowledge of the input state may help avoid the effect of barren plateaus in VQE optimization. Further, the systems and methods described herein may be configured to utilize entanglement of the parameterized gates.

The systems and methods described herein may be configured to utilize shallow circuit structures. The systems and methods described herein may be configured to utilize a specific circuit architecture which is hardware-friendly due to the shallow circuit depth and a linear entangling map.

The systems and methods described herein may identity block initialization on the parameterized set of gates. In some embodiments, the identity block initialization may choose the parameterized gates in such a way that the whole partary operation of the parameterized part of the circuit remains close to identity, which may help with the VQE optimization. In some embodiments, the parameterized gates may be arranged in layers, where the starting values of the first layer may be randomly selected, the starting values of the last layer may be set to the minus the starting values of the first layer, and the starting values of the intermediate layers may be set to a zero value.

The systems and methods described herein may combine all three aforementioned elements, which may result in a VQE algorithm with shallow circuit depth and number of entangling gates which may avoid the effect of post-selection on the starting values of the parameterized gates and the related problem of barren plateaus.

The systems and methods described herein may be configured to utilize only a 3-qubit circuit with 2 number of repetitions, but the systems and methods described herein could be generalized to larger circuit sizes. In some embodiments, the systems and methods described herein may set the last layer of Ry gates, namely θ6, θ7 and θ8, to -θ1,- θ2 and -θ3, respectively, as illustrated by FIG. 8. The systems and methods described herein may be configured to utilize an even number of repetitions where all the parameterized gates in between the first and last application of Ry gates may be set to zero, and thus, the Cz entangling gates may cancel out. As a result, the partary operation of the parameterized part of the circuit may be initialized to be the identity operator.

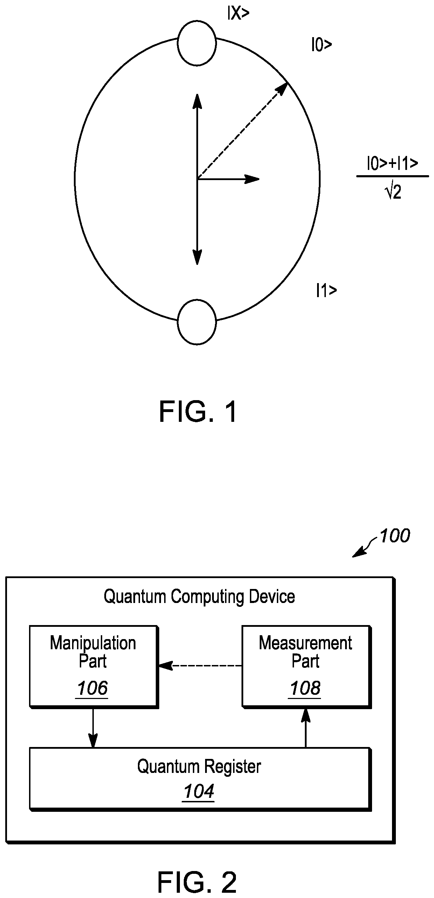

The operations acting on the qubit states may generally be one- or multi-qubit operations represented as gates on the quantum circuit. A one-qubit operation may change the state of one qubit into a specific superposition which corresponds to a rotation of the vector |X> as illustrated in FIG. 1. For example, in a superconducting quantum computer this can be accomplished by microwave pulses or in a trapped-ion quantum computer by irradiation of the ion with a laser beam. A multi-qubit operation may create an entangled state between two or more qubits. For example, in a superconducting quantum computer this may be achieved by connecting qubits via an intermediate electrical coupling circuit or in a trapped-ion quantum computer via controlling the collective vibrations of the trapped ions.

Generally, to prepare operations for solving a given problem a respective quantum mechanical representation of the problem may be translated into quantum circuit, which may be utilized to prepare a solution of the given problem. After the preparation of the predetermined solution, i.e. after the application of the operations to the quantum circuit, a projective measurement of all individual qubits is carried out returning either 0 or 1 for each qubit. On the NISQ device this measurement is achieved by applying a hardware-specific readout protocol of a series of readout operations including control pulses and monitoring the response to control pulses. For example, a superconducting qubit may be coupled to a hardware resonator. The measured shift of the resonator frequency allows to determine the state of the qubit as this shift depends on the state of the coupled qubit. In case of trapped ions, for example, an optical readout may be used, e.g. the state of the qubit is 1 if the ion emits light or 0 if the ion does not emit light or vice versa. This way qubits may be used to implement logical circuits or gates as in classical computing devices.

In FIG. 2 a schematic example of a quantum computer is illustrated. The quantum computing device 100 shown in FIG. 2 includes a quantum register 104 configured to perform the quantum computation, a manipulation part 106 configured to manipulate the quantum register, in particular, quantum elements forming the qubits, and a readout part 108 configured to collect measurement signals from the quantum register 104 for reading out the qubits after a quantum mechanical calculation. The manipulation part 106, in particular, provides manipulation signals for manipulating the quantum register, wherein the manipulation signals are generated based on received control signals that are determined based on the respective operations that should be performed on the qubits. In some embodiment a feedback loop between the manipulation part 106 and measurement part 108 can be provided. In contrast to classical computing, where one measurement cycle provides the state of a transistor, quantum computing includes performing multiple measurement cycles to provide a probability density or a probability for the qubit states.

The quantum register 104 can be based on different quantum elements representing the qubits. In some embodiments the qubits may be implemented by photons as quantum elements. Such optical quantum computing devices may include lasers that generate photons that are provided to a waveguide. A beam splitter can be provided for manipulating the photon states based on manipulation signals such as a mechanical rotation applied to a mirror. The measurement part 108 can in such an embodiment be a photon detector, and the measurement signals can be photons.

In other embodiments the qubits can be implemented by electronic states of ions trapped in a magnetic field. The manipulation part 106 can in such a case utilize a laser, and the manipulation signals can cause the providing of control laser pulses. Moreover, in this case, the readout part 108 can be a photon detector combined with read-out laser pulses, and the measurement signals 102 may be photons. Other qubit implementations may be based on superconductors as quantum elements, semiconducting material with anyons as quantum elements, or the like.

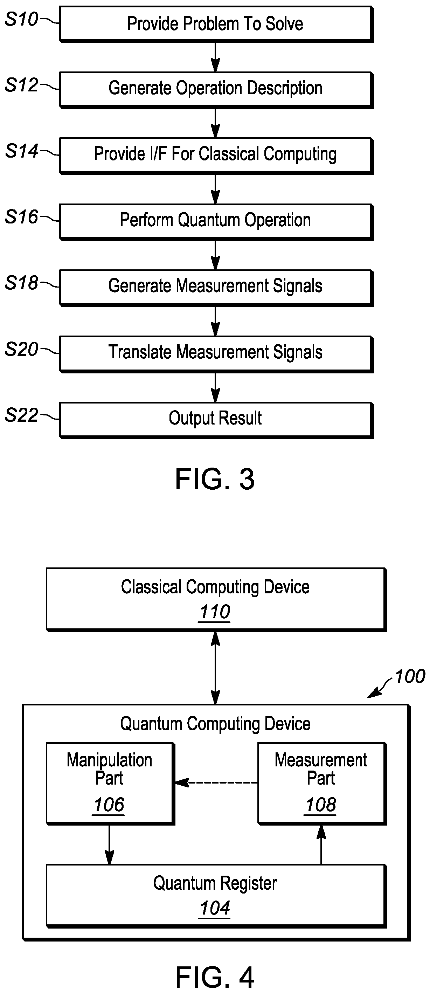

FIG. 3 illustrates a schematic exemplary method for generating a control signal to perform operations on the quantum computing device and for processing measurement signals from the quantum computing device. In most embodiments of quantum computing devices known to date, the control signals for the quantum computing device are prepared on a classical computing device and the measurement signals provided by the quantum computing device are further processed on the classical computing device. Other embodiments are, however, conceivable as quantum computing devices mature.

For generating the control signal to perform operations on the quantum computing device, the problem to be solved with the aid of the quantum computing device is provided in step S10, specifically, as a quantum circuit. Such problem may for instance determining a base state for a specific chemical formula. Other problems may include applying a VQE algorithm to a physical environment. Based on the problem to be solved, an operation description of the problem or a sub-problem may be generated in step S12 (such as a quantum circuit), wherein the operation description comprises the operations to be applied to the qubits (such as gates) of the quantum computer to solve the problem in the quantum mechanical calculation. Further, the operation description can include a reference state that allows to generate a representation of an initial qubit state on the quantum computer on which the further operations are then applied by manipulating the qubit states. Based on the operation description control signals can then be generated in step S14 to control the quantum computer, for instance, by providing the control signals to the manipulation part that can then manipulate the qubit states based on the control signals. In step S16 the manipulation part then applies the manipulation operations to individual or multiple qubits of the quantum computer, wherein based on the manipulation operations the qubits perform the quantum mechanical calculation. After the manipulation, measurement signals can be generated to determine the result of the quantum mechanical calculation in step S18. This step can include a read-out, e.g. measurement, of the qubit states after applying the manipulation operations to the initial qubit states. The measurement signals can in step S20 then be translated into a measured quantity on the classical computer and in case of a sub-problem fed back into the problem to be solved. Finally, the result of the problem calculation including the quantum mechanical calculation can be provided on the classical computing device in step S22.

FIG. 4 illustrates a schematic example of a hybrid system including a classical and a quantum computing device. As described with respect to the method illustrated in FIG. 3, quantum computing devices are often used in connection with classical computing devices. As shown in FIG. 4 a problem preparation system can be realized as a classical computing device 110 performing, for instance, steps S10, S12, S20, S22 of the method illustrated in FIG. 3. A controlling part can then be provided as interface between the classical computing device 110 and the quantum computing device 100, wherein the controlling part can also be a classical computing device, for instance, performing step S14. The control part can then be communicatively coupled with the manipulation part 106 that can control the manipulators of the quantum computing device. Also, the manipulation part 106 can be realized as a classical computing device, for instance, a classical controlling hardware for the control of specific hardware components of the quantum computer that perform the manipulation of the qubit. However, the manipulation part 106 is generally regarded as part of the quantum computer, since it directly influences the quantum register. The quantum computing device 100 is adapted to perform the quantum operation S16, in particular, by the manipulation of the qubits of the quantum register. The measurement part 108 that is also generally regarded as part of the quantum computing device can then perform the step S18 by utilizing classical hardware. The measurement part 108 can then be communicatively coupled to the preparation system for further processing of the measurement signals.

In some embodiments, the classical computing device 110 may utilize one or more processors in order to execute computer program instructions stored on a non-transitory computer-readable medium communicatively coupled to the processor of the classical computing device 110 or the manipulation part 106 of the quantum computing device 100.

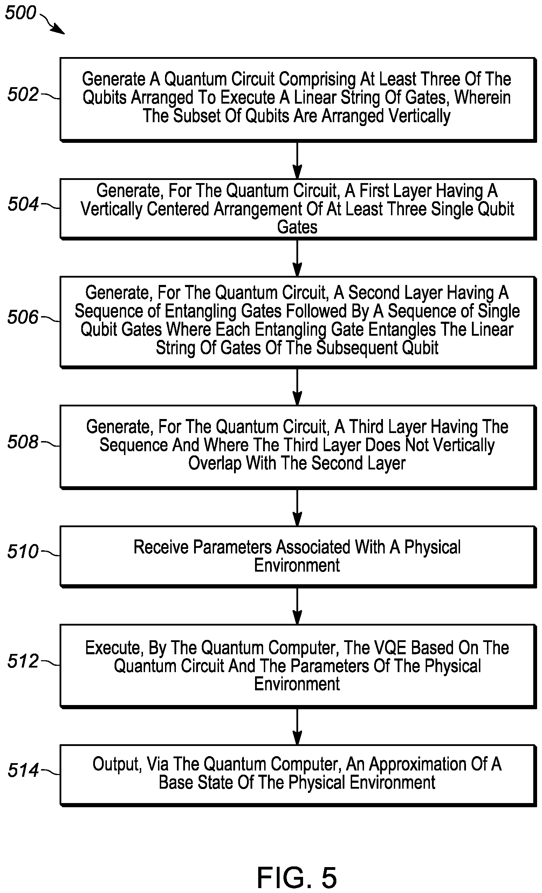

FIG. 5 is a flowchart of an example process 500 for executing a VQE algorithm based on executing a quantum circuit on the quantum computing device 100. In some implementations, one or more process blocks of FIG. 5 may be performed by the processor of the classical computing device 110 or the manipulation part 106 of the quantum computing device 100.

As shown in FIG. 5, process 500 may include generating, by a classical computer, a quantum circuit having a subset of qubits including at least three of the qubits from a plurality of qubits arranged to execute a linear string of gates, where the subset of qubits are arranged vertically and execute the linear string of gates in a horizontal direction (block 502). In some embodiments, the processor of the classical computing device 110 may be configured to generate a shallow state circuit having shallow circuit depth and a number of gates.

As shown in FIG. 5, process 500 may further include generating, for the quantum circuit, a first layer having a vertically centered arrangement of at least three single qubit gates (e.g., Ry gates, Rz gates, and Rx gates) on each of the linear strings of gates for each of the subset of qubits (block 504). In some embodiments, the processor of the classical computing device 110 may arrange the qubits of the subset of qubits along a grid where each qubit is assigned a number of gates which transform the state of the qubit from an initialized position on the left side starting position as it moves to the right side measuring position. In some embodiments, the state of each qubit is measured after the qubits have performed the operations assigned to them via their respective string of gates by the measuring part 108.

As shown in FIG. 5, process 500 may also include generating, for the quantum circuit, a second layer having a sequence of entangling gates (e.g., Cz gates, Cx gates, and Cy gates) followed by a single qubit gate gate on each linear string of gates where the entangling gate entangles the linear string of gates of the subsequent qubit (block 506). In some embodiments, the processor of the classical computing device 110 may arrange gates on the linear string of gates in layers, where layers are stacked from the left side starting position to the right side measuring position. In some embodiments, a controlled Cz gate applies a controlled Z gate to a target qubit based on the state of the control qubit. For example, when the control qubit is in a 0 state, the gate performs no operation, but when the control qubit is in a 1 state, then the gate applies a Pauli Z gate to the target qubit.

As shown in FIG. 5, process 500 may further include generating, for the quantum circuit, a third layer having the step shape of the second layer where the third layer does not vertically overlap with the second layer (block 508). In some embodiments, the processor of the classical computing device 110 may include the third layer on the linear string of gates in such a manner that the right most gate of the second layer completes operation of its respective qubit before the first gate of the third layer begins an operation on its respective qubit, as illustrated in FIG. 7.

As shown in FIG. 5, process 500 may further include receiving parameters associated with a physical environment (block 510). In some embodiments, the processor of the classical computing device 110 may receive parameters related to an atom or atoms in a physical environment. In some embodiments, the parameters may relate to one or more atoms in a physical environment where a chemical reaction may occur or is occurring.

As shown in FIG. 5, process 500 may further include executing, by the quantum computer, the VQE algorithm based on the quantum circuit and the parameters of the physical environment (block 512). In some embodiments, the subset of qubits of the quantum computing device 100 may be assigned to the linear string of gates of the quantum circuit. In some embodiments, the qubits may be initialized to a starting state such as a mean field starting state (i.e., a classically inspired state that is not a product state) which may create some entanglement between two or more qubits.

As shown in FIG. 5, process 500 may further include outputting, via the quantum computer, an approximation of a base state of the physical environment (block 514). In some embodiments, the processor of the classical computing device 110 may receive a measurement from each of the qubits of the subset of qubits after all the operations of the linear string of gates has been executed, which are read by the measuring part 108.

Although FIG. 5 shows example blocks of process 500, in some implementations, process 500 may include additional blocks, fewer blocks, different blocks, or differently arranged blocks than those depicted in FIG. 5. Additionally, or alternatively, two or more of the blocks of process 500 may be performed in parallel.

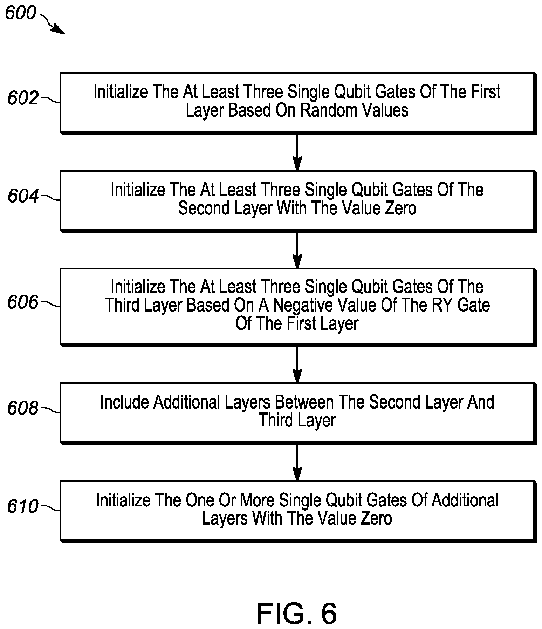

FIG. 6 is a flowchart of an example process 600 for initializing the quantum circuit. In some implementations, one or more process blocks of FIG. 6 may be performed by the processor of the classical computing device 110 or the manipulation part 106 of the quantum computing device 100.

As shown in FIG. 6, process 600 may include initializing the at least three single qubit gates (e.g., Ry gates, Rz gates, and Rx gates) of the first layer based on random values (block 602). In some embodiments, the single qubit gate may be an Ry gate and the initializing the Ry gate associates a value with the Ry gate for the rotation operation of the Ry gate. In some embodiments, the initialization value of the Ry gate may indicate the rotation value of the qubit executing the operation around the y-axis of the respective qubit.

As shown in FIG. 6, process 600 may further include initializing the at least three single qubit gates of the second layer with the value zero (block 604). In some embodiments, the value of the processor of the classical computing device 110 may initialize the single qubit gate of the second layer with the value zero. In some embodiments, the single qubit gate may be an Ry gate and an Ry gate initialized with the value zero indicates an operation of rotating the respective qubit zero radians around the y-axis.

As shown in FIG. 6, process 600 may also include initializing the at least three Ry gates of the last layer based on a negative value of the single qubit gate of the first layer which is on the respective string of gates (block 606). In some embodiments, the value of the processor of the classical computing device 110 may initialize the single qubit gate of the last layer with the negative value of the first layer. For example, the single qubit gate may be an Ry gate and when the Ry gate of the first Ry gate is initialized to 3.37 radians, the Ry gate of the last layer on the same linear path is initialized to -3.37 radians.

As shown in FIG. 6, process 600 may further include adding layers to the quantum circuit, in between the second layer and third layer (block 608). In some embodiments, the processor of the classical computing device 110 may further configure the quantum circuit to include additional layers where the total number of layers is odd. In some embodiments, the additional layers mirror the configuration and initialization of the second layer and our inserted in a position between the first layer and the last layer.

As shown in FIG. 6, process 600 may include initializing one or more Ry gates of the additional layers with the value zero (block 610). In some embodiments, the processor of the classical computing device 110 may initialize the Ry gates of the additional layers to zero where an Ry gate initialized with the value zero indicates an operation of rotating the respective qubit zero radians around the y-axis.

Although FIG. 6 shows example blocks of process 600, in some implementations, process 600 may include additional blocks, fewer blocks, different blocks, or differently arranged blocks than those depicted in FIG. 6. Additionally, or alternatively, two or more of the blocks of process 600 may be performed in parallel.

FIG. 7 is a diagram illustrating an example arrangement 700 of the quantum circuit having two layers. The quantum circuit may be configured by the processor of the classical computing device 110.

As shown in FIG. 7, the arrangement 700 may include a starting position 702 for the each of the subset of qubits. In some embodiments, a qubit in the 702 position is initialized in a starting state before execution of the VGE algorithm by the manipulation part 106 of the quantum computing device 100.

As further shown in FIG. 7, the arrangement 700 may also include a first layer 704 of gates consisting of Ry gates forming a straight line in a vertical direction. In some embodiments, this layer shape is not repeated and is only used for the first layer of the arrangement 700.

As also shown in FIG. 7, the arrangement 700 may include a Cz gate 706 and Ry gate 708. In some embodiments, the Cz gate 706 may be the first logic gate of the second layer of the arrangement 700 followed by the Ry gate 708. In some embodiments, a Cz and an Ry gate is added to each of the linear string of gates and spaced to form a stair structure.

As further shown in FIG. 7, the arrangement 700 may include an Ry gate 710 at the right most position of the last linear string of gates. In some embodiments, the Ry gate 710 is the only Ry gate of the second layer that is vertical symmetrical with another Ry gate of the second layer.

FIG. 8 is a diagram illustrating an example initialization of the uninitialized quantum circuit 800 to generate the initialized quantum circuit 850. The quantum circuit 800 may be initialized by the processor of the classical computing device 110.

As shown in FIG. 8, the uninitialized quantum circuit 800 consists of three layers, a first uninitialized layer 802, a second uninitialized layer 804, and a third uninitialized layer 806.

As further shown in FIG. 8, the initialized circuit 850 consists of three layers, a first initialized layer 852, a second initialized layer 854, and a last initialized layer 856. In some embodiments, the first initialized layer 852 may be initialized with random numbers. For example, Ry gate 0, Ry gate 1, and Ry gate 2 are initialized with 3.37, 2.29, and 5.41 respectively. In some embodiments, the second initialized layer 854 may be initialized with the value 0. In some embodiments, the last initialized layer 856 may be initialized with the negative values of the corresponding Ry gate of the first initialized layer 852. For example, the Ry gate 6, Ry gate 7, and Ry gate 8 are initialized with -3.37, -2.29, and -5.41 respectively.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. A method for executing a variational quantum eigensolver (VQE) algorithm using a quantum circuit executed on a quantum computer, the method comprising:
generating, by a classical computer, the quantum circuit comprising:
a subset of qubits including at least three of the qubits from a plurality of qubits arranged to execute a linear string of gates, wherein the subset of qubits are arranged vertically and execute the linear string of gates in a horizontal direction;
a first layer comprising a vertically centered arrangement of at least three single qubit gates on each of the linear string of gates for each of the subset of qubits;
a second layer comprising a sequence of entangling gates followed by a single qubit gate on each linear string of gates where each entangling gate entangles the linear string of gates of the subsequent qubit;
a third layer comprising the sequence of the second layer where the third layer does not vertically overlap with the second layer;
receiving parameters associated with a physical environment;
executing, by the quantum computer, the VQE algorithm based on the quantum
circuit and the parameters of the physical environment; and outputting, via the quantum computer, an approximation of a base state of the
physical environment.

2. The method of claim 1, wherein the method further comprises:
initializing the at least three single qubit gates of the first layer based on random values;
initializing the at least three single qubit gates of the second layer with a value zero; and
initializing the at least three single qubit gates of the third layer based on a negative value of the single qubit gate of the first layer which is on the respective linear string of gates.

3. The method of claim 2, wherein additional layers are included in between the second layer and the third layer, and wherein one or more single qubit gates of additional layers are initialized with the value zero.

4. The method of claim 1, wherein the method further comprises:
configuring the subset of qubits to an entangled initial state.

5. The method of claim 4, wherein the entangled initial state is not a product state.

6. The method of claim 1, wherein a right most single qubit gate of the linear string of gates associated with a third qubit of the subset of qubits is vertically centered with a right most single qubit gate of a second qubit of the subset of qubits.

7. The method of claim 1, wherein a total number of layers is odd.

8. The method of claim 1, wherein the quantum computer is a noisy intermediate scale quantum computer.

9. A system for executing a variational quantum eigensolver (VQE) algorithm on a quantum circuit, the system comprising:
a quantum computer comprising a plurality of qubits, and a classical computer comprising at least one processor and at least one non-transitory computer-readable medium, the at least one non-transitory computer-readable medium having computer program instructions configured to control the quantum computer, the instructions causing the system to:
generate, by the classical computer, the quantum circuit comprising:
a subset of qubits including at least three of the qubits from the plurality of qubits arranged to execute a linear string of gates, wherein the subset of qubits are arranged vertically and execute the linear string of gates in a horizontal direction;
a first layer comprising a vertically centered arrangement of at least three single qubit gates on each of the linear string of gates for each of the subset of qubits;
a second layer comprising a sequence of entangling gates followed by an single qubit gate on each linear string of gates where each entangling gate entangles the linear string of gates of the subsequent qubit;
a third layer comprising the sequence of the second layer where the third layer does not vertically overlap with the second layer;
receive parameters associated with a physical environment;
execute, by the quantum computer, the VQE algorithm based on the quantum circuit and the parameters of the physical environment; and
output, via the quantum computer, an approximation of a base state of the physical environment.

10. The system of claim 9, wherein the instructions cause the system to further:
initialize the at least three single qubit gates of the first layer based on random values;
initialize the at least three single qubit gates of the second layer with a value zero; and
initialize the at least three single qubit gates of the third layer based on a negative value of the single qubit gate of the first layer which is on the respective linear string of gates.

11. The system of claim 10, wherein additional layers are included in between the second layer and the third layer, and wherein one or more single qubit gates of additional layers are initialized with the value zero.

12. The system of claim 9, wherein the instructions cause the system to further:
configure the subset of qubits to an entangled initial state.

13. The system of claim 12, wherein the entangled initial state is not a product state.

14. The system of claim 9, wherein a right most single qubit gate of the linear string of gates associated with a third qubit of the subset of qubits is vertically centered with a right most single qubit gate of a second qubit of the subset of qubits.

15. The system of claim 9, wherein a total number of layers is odd.

16. The system of claim 9, wherein the quantum computer is a noisy intermediate scale quantum computer.

17. A system for executing a variational quantum eigensolver (VQE) algorithm on a quantum circuit, the system comprising:
a quantum computer comprising a plurality of qubits, and a classical computer comprising at least one processor and at least one non-transitory computer-readable medium, the at least one non-transitory computer-readable medium having computer program instructions configured to control the quantum computer, the instructions causing the system to:
generate, by the classical computer, the quantum circuit comprising:
a subset of qubits including at least three of the qubits from the plurality of qubits arranged to execute a linear string of gates, wherein the subset of qubits are arranged vertically and execute the linear string of gates in a horizontal direction;
a first layer comprising a vertically centered arrangement of at least three single qubit gates on each of the linear string of gates for each of the subset of qubits;
a second layer comprising a sequence of entangling gate followed by a single qubit gate on each linear string of gates where each entangling gate entangles the linear string of gates of the subsequent qubit;
a third layer comprising the sequence of the second layer where the third layer does not vertically overlap with the second layer;
receive parameters associated with a physical environment;
execute, by the quantum computer, the VQE algorithm based on the quantum circuit and the parameters of the physical environment; and
output, via the quantum computer, an approximation of a base state of the physical environment.

18. The system of claim 17, wherein the instructions cause the system to further:
initialize the at least three single qubit gates of the first layer based on random values;
initialize the at least three single qubit gates of the second layer with a value zero; and
initialize the at least three single qubit gates of the third layer based on a negative value of the single qubit gate of the first layer which is on the respective linear string of gates.

19. The system of claim 17, wherein the instructions cause the system to further: configure the subset of qubits to an entangled initial state.

20. The system of claim 17, wherein a right most single qubit gate of the linear string of gates associated with a third qubit of the subset of qubits is vertically centered with a right most single qubit gate of a second qubit of the subset of qubits.
